# NEUE EUROPÄISCHE PATENTSCHRIFT

(11) **EP 0 205 657 B2**
(45) Veröffentlichungstag und Bekanntmachung des Hinweises auf die Entscheidung über den Einspruch: **16.03.1994**
(45) Hinweis auf die Patenterteilung: 11.04.1990
(21) Anmeldenummer: 85114297.6
(22) Anmeldetag: 09.11.1985
(51) Int. Cl.: F16F 13/00, B60K 5/12

(54) **Hydraulisch dämpfendes Motorlager**
Hydraulically damped engine support
Support de moteur à amortissement hydraulique

(30) Priorität: 22.06.1985 DE 3522482
(43) Veröffentlichungstag der Anmeldung: 30.12.1986
(73) Patentinhaber: Firma Carl Freudenberg, 69469 Weinheim (DE)
(72) Erfinder: Hamaekers, Arno, D-6946 Gorxheimertal (DE); Rudolf, Hans J., D-2002 Rastede (DE); Simuttis, Arnold, Dr., D-6550 Bad Kreuznach (DE)

(56) Entgegenhaltungen:
- EP-A- 0 098 330
- EP-A- 0 098 331
- EP-B- 0 027 751
- DE-A- 3 225 700
- DE-A- 3 506 047
- DE-C- 2 905 090
- US-A- 3 314 600

## Beschreibung

Die Erfindung betrifft ein hydraulisch dämpfendes Motorlager, bei dem ein Auflager, ein rinförmig ausgebildetes Federelement und Traglager einen mit einer hydraulischen Flüssigkeit gefüllten Arbeitsraum umschließen, der durch eine bei einem bestimmten Druck optimal durchströmte Drosselöffnung mit einem volumenveränderlichen, flüssigkeitsgefüllten Ausgleichsraum verbunden ist, wobei zwischen den beiden Räumen eine im Bereich ihres äußeren Umfanges an dem Traglager festgelegte, in Richtung des Arbeits- und des Ausgleichsraumes wechselweise ausbauchbare Membrane angeordnet ist, die in wenigstens einem Teilbereich mit mindestens einer nicht geradlinig verlaufenden Durchtrennung versehen ist, die eine Zunge umschließt, die die Bereiche der Membrane überbrückt, in denen die Membrane bei einer Ausbauchung die maximale und die minimale Dehnung aufweist.

Auf ein Motorlager der vorgenannten Art nimmt die deutsche Offenlegungsschrift 32 25 700 Bezug. Die Membrane ist dabei zwischen einander symmetrisch zugeordneten und in dem Traglager starr festgelegten Gitterplatten angeordnet und ist im Bereich der Gitteröffnungen mit sie durchschneidenden Durchtrennungen versehen. Hierdurch gelingt es, die durch das Überfahren von Bodenunebenheiten verursachten, niederfrequenten Schwingungen in guter Weise zu dämpfen. Dabei muß allerdings der Nachteil in Kauf genommen werden, daß beim Ein- und Ausschalten des Verbrennungsmotors Schüttelbewegungen und Eigengeräusche des Motorlagers durch Schlagen der Membrane gegen die Gitter in störender Weise auf die Karosserie übertragen werden. Schwingungen dieser Art werden somit weder gut gedämpft noch gut isoliert.

Die Dämpfung und Isolierung von Schwingungen erfordern Maßnahmen, die sich in ihrer Wirkung gewöhnlich gegenseitig beeinträchtigen. Das ist auch bei der vorstehend beschriebenen Ausführung eines Motorlagers der Fall. Die in bezug auf das Überfahren von Bodenunebenheiten erwünschte Dämpfungswirkung geht daher zu Lasten einer guten Isolierwirkung, welche in bezug auf die beim Ein- und Ausschalten des Motors auftretenden Schüttelbewegungen angestrebt wird. Die Ausführung stellt daher nur einen mehr oder weniger unbefriedigenden Kompromiss dar. Hochfrequente Schwingungen oberhalb von 30 Hz werden störend auf die Karosserie übertragen.

Auf eine ähnliche Ausführung nimmt die britische Patentschrift 811 748 Bezug. Sie enthält eine zwischen dem Arbeits- und Ausgleichsraum angeordnete Membrane mit einer kalibrierten Durchschnittsöffnung. Die Membrane ist im Bereich ihres Außenumfanges zwischen starr mit dem Traglager verbundenen Flanschen eingespannt. Das Motorlager weist dieselben Nachteile auf wie die eingangs erwähnte Ausführung.

Aus der EP-B-0 027 751 ist ein hydraulisch dämpfendes Motorlager bekannt, bei dem eine Membrane im Randbereich einen Ringwults aufweist, der im Lagergehäuse fest eingespannt ist.

Der Erfindung liegt die Aufgabe zugrunde, ein Motorlager der eingangs genannten Art derart weiter zu entwickeln, daß insbesondere bei der Verwendung verstärkter oder dicker Membranen die durch das Überfahren von Bodenunebenheiten verursachten Motorschwingungen in guter Weise gedämpft werden und daß hochfrequente Motorschwingungen in wesentlich verbesserter Weise isoliert werden, ohne daß sich bei großen Motorbewegungen störende Geräusche ergeben, und das sich durch eine erhöhte mechanische Widerstandsfähigkeit auszeichnet.

Diese Aufgabe wird erfindungsgemäß durch die kennzeichnenden Merkmale des Patentanspruchs 1 gelöst.

Zur Erzielung einer leichten Ausbauchbarkeit der Membrane ist diese so bemessen, daß bei nicht verformter Membrane ein radialer Abstand zwischen den Ringvorsprüngen und dem Wulst vorhanden ist. Die durch die Einleitung hochfrequenter Schwingungen verursachten Ausbauchungen verursachen bei einer solchen Ausführung noch nicht unmittelbar eine elastische Dehnung der Membrane und können dadurch sehr leicht isoliert werden. Die Anwendung des Merkmals empfiehlt sich vor allem bei Membranen eines vergrößerten Dehnungswiderstandes, beispielsweise solchen, die mit einer Verstärkungseinlage versehen sind, die aus einem gummielastischen Werkstoff verminderter Dehnbarkeit bestehen und/oder eine größere Dicke haben, beispielsweise eine solche von bis zu 4 mm. Membranen der genannten Art zeichnen sich durch eine große mechanische Widerstandsfähigkeit aus. Ihre Anwendung empfiehlt sich daher vor allem in Fällen, in denen eine große Dauerhaftigkeit angestrebt wird.

Die Membrane wird beiderseits durch sich im wesentlichen parallel erstreckende Flächen begrenzt. Ihre Dicke beträgt wenigstens 1 mm. Schwingungen eines niedrigeren Frequenzspektrums führen zu einer größeren Verformung der Membrane. Diese besteht aus gummielastischem Werkstoff und eine vergrößerte Verformung hat einen relativ vergrößerten Verformungswiderstand zur Folge und bis zum Erreichen eines bestimmten Wertes. der einem bestimmten Differenzdruck entspricht, eine zunehmende Vergrößerung des zwischen dem Arbeits- und dem Ausgleichsraum in der Drosselöffnung hin- und herschwingenden Flüssigkeitsvolumens. Eine gute Dampfungswirkung ist hiervon die Folge, was ausgenutzt wird in bezug auf Schwingungen. die durch das Überfahren von Bodenunebenheiten verursacht werden. Diese Schwingungen sind leicht spezifizierbar und erfordern im Hinblick auf eine optimale Dampfungswirkung eine bestimmte Dimensionierung der Drosselöffnung. Die diesbezüglichen Zusammenhänge sind bekannt und gelangen auch bei der erfindungsgemäß vorgeschlagenen Ausführung zur Anwendung.

Die beim Ein- und Ausschalten des Verbrennungsmotors auftretenden Schüttelbewegungen mit einer noch größeren Amplitude führen zu einer noch größeren Ausbauchung der Membrane in Richtung des einen niedrigeren Druck aufweisenden Raumes. Hierdurch ergibt sich eine noch intensivere Dehnung der Membrane. in die die Zunge ebenfalls nicht einbezogen ist. Es bildet sich als Folge dieser Dehnung ein Überströmkanal zwischen der Spitze der Zunge und dem gegenüberliegenden Wandungsbereich der Membrane aus, der zunächst die Gestalt eines Spaltes hat, und durch den Flüssigkeit aus dem Raum höheren Druckes entweichen kann. Bei noch höherem Differenzdruck kommt es danach zu einer die beschriebene Spaltbildung überlagernden Bewegung der Zunge. die darin besteht, daß die Zungenspitze aus der sich mit der Mitte der Membran deckenden Mittelstellung in Richtung des Raumes niedrigeren Druckes herausklappt. Der so erhaltene Uberströmkanal ist von geziel wergrößertem Querschnitt.

Der Druck in dem Raum der Drucksteigerung wird hierdurch auf dem Niveau des Druckes stabilisiert, bei dem ein maximaler Flüssigkeits. übertritt in den Raum niedrigeren Druckes erfolgt. Bei optimaler Dampfungswirkung wird hierdurch einer Übertragung nennenswerter Kräfte auf die Karrosserie wirksam begegnet, was gleichbedeutend ist mit einer verbesserten Isolierung des Motorschüttelns. Dabei ist es von Vorteil, daß diese Isolierwirkung nicht zu Lasten der Dämpfungswirkung geht, die in bezug auf das Überfahren von Bodenunebenheiten erwünscht ist. In diesem Falle verharrt die Zunge in der Mittelstellung. Für den Flüssigkeitsübertritt zwischen Arbeitsraum und Ausgleichsraum steht somit nur die Drosselöffnung zur Verfügung. Eine fahrzeugbezogene Feinabstimmung der Querschnitte des Überströmkanals und der Drosselöffnung ist unerläßlich. In den meisten Fallen genügt jedoch eine Ausbildung, bei der der Überströmkanal einen maximalen Querschnitt aufweist, der nicht größer ist als der Querschnitt der Drosselöffnung.

Nach einer vorteilhaften Ausgestaltung ist es vorgesehen, daß die Durchtrennung so geführt ist, daß sich die Zunge von dem Wulst ausgehend in Richtung des Bereiches der Membrane erstreckt, in dem unter Betriebsbedingungen die maximale Dehnung zu erwarten ist. Die durch das Ausklappen der Zunge aus der Membrane verursachte Erweiterung des Überströmkanals bei extrem goßen Amplituden wird hierdurch erleichtert.

Die Zunge und die Membrane sind durch den Wulst verbunden um sicherzustellen, daß die Zunge nach dem Abklingen entsprechender Überdrücke in dem Arbeits- oder Ausgleichsraum stets in ihre neutralen Lage in der Membrane zurück- kehrt. Die Durchtrennung kann jedoch beiderseits der Zunge in den Wulst eingreifend verlängert sein, was die relative Beweglichkeit der Zunge erleichtert.

Eine präzise Festlegung der Erstreckung der Durchtrennung ist in jedem Falle unerläßlich.

Nach einer anderen Ausgestaltung ist es vorgesehen, daß mehrere Durchtrennungen unter Bildung von gleichmäßig auf den Umfang verteilten Zungen vorgesehen sind. Ein gleichmäßiger und schneller Druckabbau in dem Arbeits- bzw. Ausgleichsraum beim Auftreten von Schüttelbewegungen wird hierdurch begünstigt, d.h. eine Verbesserung der Isolierwirkung.

Falls mehrere Durchtrennungen vorhanden sind, hat es sich als vorteilhaft bewährt, wenn diese so angeordnet sind, daß sich einander gegenüberliegende Zungen ergeben. Das Öffnen der Überströmkanäle beim Auftreten von Überdrücken wird hierdurch begünstigt und damit eine weitere Verbesserung hinsichtlich der Isolierung und Dämpfung von Schüttelbewegungen.

Die Ringvorsprünge sollen auf der der Membrane und dem Wulst zugewandte Seite ein konvex gerundetes Profil aufweisen um eine mechanische Beschädigung der Membrane oder des Wulstes zu verhindern. Eine auch im langfristigen Gebrauch gleichmäßige Verformbarkeit der Membrane ist hierdurch gewährleistet. was von wesentlicher Bedeutung ist im Hinblick auf das nur bei der Isolierung von Schüttelbewegungen erwünschte Öffnen des Überströmkanals.

Die Zunge wird in der Ebene der Membrane von der Durchtrennung umschlossen. Sie ist durch eine Tiefe definiert, die größer ist als die Dicke der Membrane an ihrer dünnsten Stelle, zweckmäßig durch eine Tiefe, die größer ist als die doppelte Dicke der Membrane an dieser Stelle. Die Durchtrennung als solche kann einen gleichmäßig oder ungleichmäßig gekrümmten Verlauf haben, jedoch in Teilbereichen gegebenenfalls auch einen geradlinigen Verlauf. Halbkreisförmig verlaufende Durchtrennungen lassen sich besonders einfach erzeugen. Für hochwertige Anwendungen hat es sich bewährt, die Durchtrennung so auszubilden, daß die Zunge an ihrer Vorderseite bogenförmig und seitlich geradlinig begrenzt ist. Die Verwendung spitz auslaufender Zungen ist ebenfalls möglich.

Die Tiefe definiert jeweils den Abstand der Zungenspitze von der Zungenwurzel. Sie soll nicht mehr betragen als das 8-fache, vorzugsweise nicht mehr als das 5-fache des Wertes der Dicke, gemessen an der dünnsten Stelle der Zunge mit der Maßgabe, daß der Wert wenigstens so groß ist wie die Dicke der Zunge an der dünnsten Stelle, zweckmäßig wenigstens doppelt so groß.

Die Durchtrennung kann, senkrecht zur Ebene der Membrane betrachtet, ein von der Geraden abweichendes Profil aufweisen. Sie kann auch die Zunge mit einem U-förmigen Verlauf umschließen, was dazu führt, daß die Zunge erst nach Überwindung eines bestimmten Widerstandes aus iher Mittelstellung herausklappt. Eine nichtspiegelbildliche Zuordnung zur Mittellinie führt dazu, daß der beim Ausklappen der Zunge aus der Membrane gebildete Überströmkanal in der einen Richtung bei niedrigeren Druck geöffnet wird als in der anderen Richtung. Der Maximalausschlag bei Einschalten bzw. beim Ausschalten eines Verbrennungsmotors kann hierdurch ohne Beeinträchtigung der übrigen Wirkungen in besonders günstiger Weise kompensiert werden.

Bei in sich gewölbtem oder schrägem Verlauf der Durchtrennung hat es sich als zweckmäßig bewährt, wenn das Profil die beiderseitigen Oberflächen der Membrane unter einem Winkel von 45 bis 80° durchschneidet. Innerhalb des genannten Bereiches ist ein besonders geringer Verschleiß an den durch die Durchtrennung begrenzten Kanten zu beobachten, was von erheblichem Vorteil ist in bezug auf langfristig gleichbleibende Gebrauchseingeschaften.

Die durch die die Membrane unterbrechende Zunge bewirkte Streuung des Dämpfungsverhaltens läßt sich verändern durch eine Verdickung der Membrane und/oder der Zunge in dem an die Durchtrennung angrenzenden Bereich. In Fällen, in denen die Zunge verdickt ist, ergibt sich eine besonders gute Isolierwirkung in akustischer Hinsicht. In Fällen in denen die Membrane verdickt ist resultiert ein verbessertes Dämpfungsverhalten.

Die mit dem erfindungsgemäßen Motorlager erzielten Vorteile bestehen neben einer verbesserten Isolierwirkung hochfrequenter Schwingungen vor allem in einer guten Isolierung der beim Ein- und Ausschalten eines Verbrennungsmotors entstehenden Schüttelbewegungen. Diese treten daher nicht mehr so störend in Erscheinung wie bei den bisher bekannten Ausführungen. Das Motorlager zeichnet sich durch eine völlige Geräuschfreiheit während seiner Benutzung aus sowie durch langfristig gleichbleibende Gebrauchseigenschaften.

Eine beispielhafte Ausführung des erfindungsgemäßen Motorlagers ist in der in der Anlage beigefügten Zeichnung dargestellt. Sie wird nachfolgend näher erläutert. Es zeigen:

Figur 1 ein längsgeschnitten dargestelltes Motorlager, wobei der linke Teil der Darstellung das Motorlager in ausgefederter Form zeigt, der rechte Teil der Darstellung in eingefederter Form.

Figuren 2 bis 9 beispielhafte Ausführungen von Membranen der in dem erfindungsgemäß vorgeschlagenen Motorlager zur Anwendung gelangenden Art.

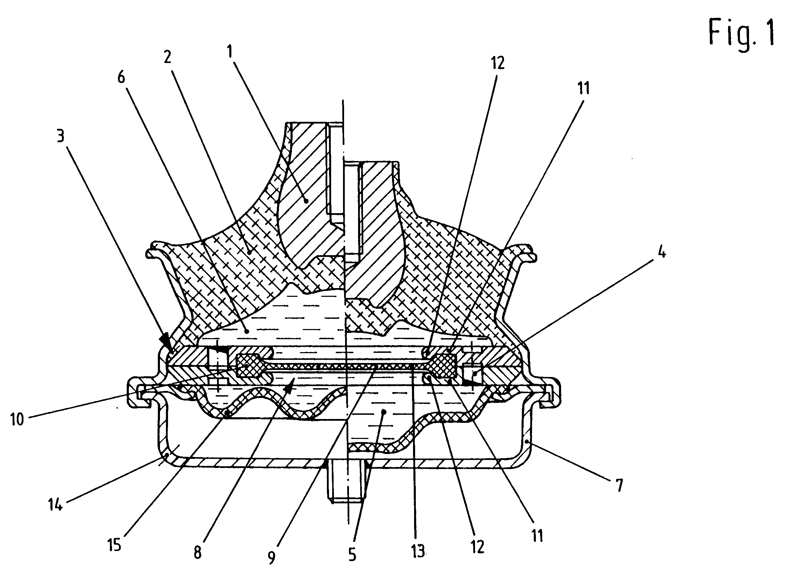

Das in Figur 1 gezeigte Motorlager umfaßt die Lagerplatte 1 und die Bodenplatte 7, die durch Schraubverbindungen einerseits an dem zu lagernden Motor und andererseits an der den Motor aufnehmenden Karosserie festlegbar sind. Beide Teile sind durch das hohlkegelig ausgebildete Federelement 2 aus gummielastischem Werkstoff verbunden. Dieses nimmt die eigentliche Motorlast auf, sowie die Schwingungen, die sich unter Betriebsbedingungen zwischen dem Motor und der Karosserie ergeben.

Relativ unbeweglich zu der Bodenplatte 7 ist das Traglager 3 in dem Motorlager festgelegt. Dieses besteht aus zwei kreisförmig begrenzten, metallischen Platten, die unter zangenförmiger Umschließung des Wulstes 10 der Membrane 8 zusammengefügt sind. Die Planen werden gemeinsam von der ineinander übergehenden Drosselöffnung 4 durchdrungen, welche den oberseits anschließenden Arbeitsraum 6 mit dem unterseits anschließenden Ausgleichsraum 5 verbindet. Letzter ist durch einen Rollbalg 15 abgeschlossen und ebenso wie der Arbeitsraum und die Drosselöffnung mit einer Flüssigkeit gefüllt, meckmäßigerweise mit Frostschutzmittel enthaltendem Wasser.

Die Membrane 8 ist kreisförmig begrenzt und besteht aus einer Härte Shore A von 40-90. Sie ist im Bereich ihres Außenumfanges mit dem einstückig angeformten Wulst 10 versehen. der eine senkrechte Dicke von 6,9 mm aufweist. Der Wulst wird unter Vermeidung einer Pressung von den Vorsprüngen 11 des Traglagers und deren Ringvorsprüngen 12 umschlossen. Der mittlere Bereich der Membrane 8 ist dadurch leicht ausbauchbar, wenn sich eine Druckveränderung in dem Arbeitsraum 6 relativ zu dem Ausgleichsraum 5 ergibt, beispielsweise als Folge der Einleitung hochfrequenter Schwingungen.

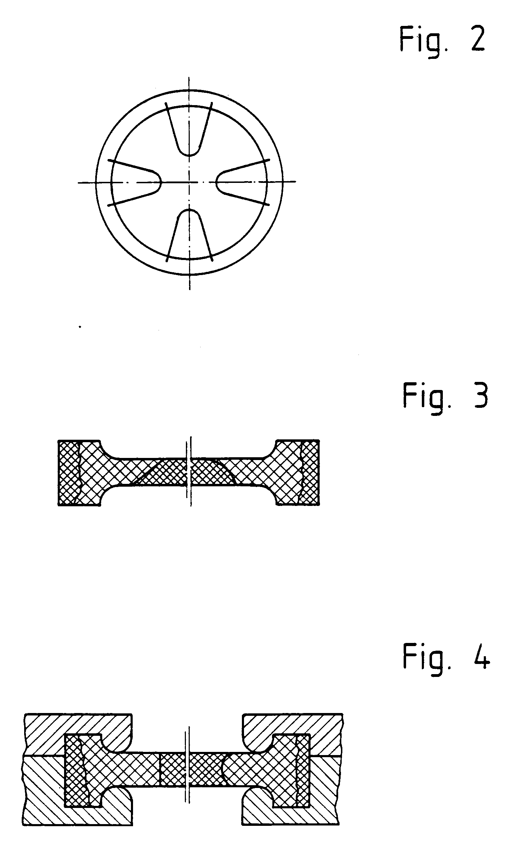

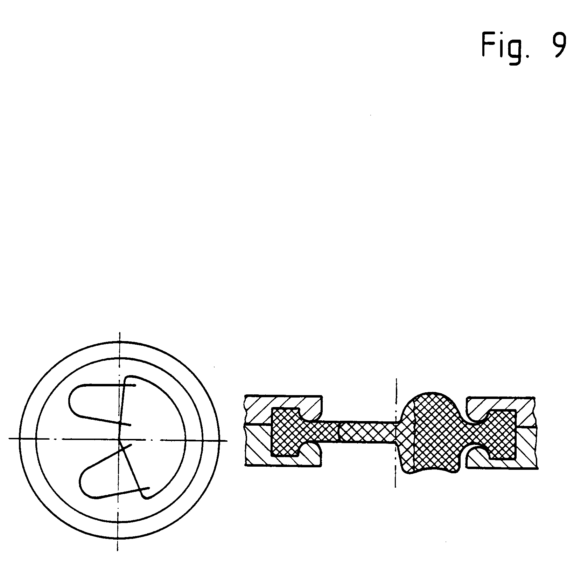

Die Membrane ist in dem innerhalb des Wulstes liegendenden Bereich mit einer Durchtrennung versehen, die durch ihre Länge und den U-förmigen Verlauf eine aus der Ebene der Membrane ausklappbare Zunge umschließt. Eine derartige Zunge ist grundsätzlich ausreichend, wenn sie entsprechend dimensioniert ist. Im Hinblick auf die Erzielung einer guten Dauerhaltbarkeit hat es sich jedoch als vorteilhaft bewährt, wenn mehrere, entsprechend kleiner dimensionierte Zungen vorhanden sind, wobei diese auch so modifiziert und der Membrane zugeordnet werden können, wie in den Figuren 2 bis 9 gezeigt. Die die einzelnen Zungen aus der Membrane herausschneidende Durchtrennung ist in jedem Falle von einem Wulst ausgehend geführt und endet nach einem U-förmigen Verlauf wieder an demselben. Die von der Durchtrennung umschlossene Zunge überbrückt Teilbereiche der Membrane, in denen sich bei einer Ausbauchung die maximale und die minimale Dehnung ergibt. Die Zungenspitze nimmt dadurch bereits bei einer geringfügigen Ausbauchung der Membrane einen Abstand von derselben ein, durch den Flüssigkeit durchtreten kann, Die Durchtrennung ist bei den Ausführungsbeispielen beiderseits in den Wulst hineinragend verlängert, wodurch sich eine verbesserte Beweglichkeit der einzelnen Zungen ergibt.

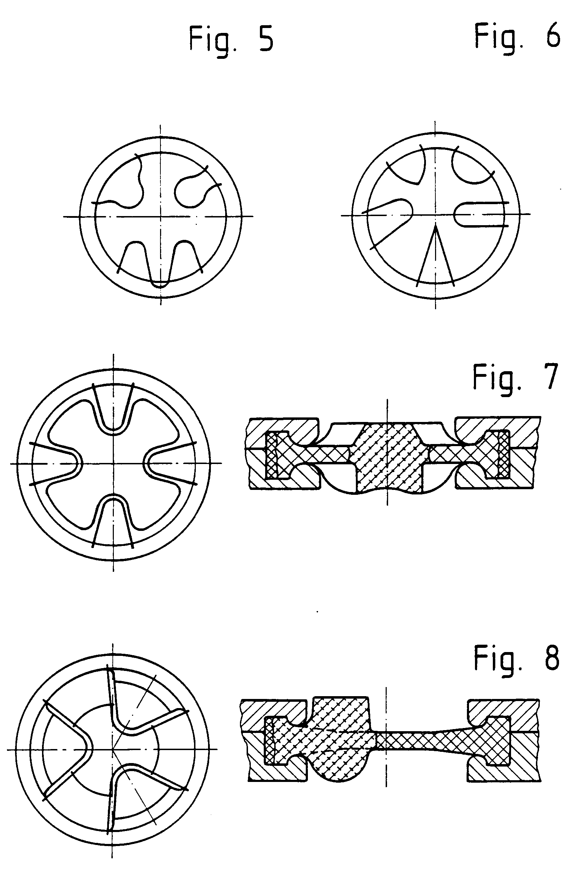

Der die Durchtrennung bildende Schnitt kann im Hinblick auf die Erzielung einer unterschiedlichen Durchlässigkeit in beiden Richtungen einen die Membrane nicht senkrechten und gegebenenfalls nicht geradlinien Verlauf haben. Einige Ausführungsformen sind in den Fig. 3 und 4 angedeutet. Das Profil der Durchtrennung durchschneidet bei der in Fig. 4, rechts, gezeigten Variante die Oberfläche der Membrane nach einem im Inneren gewölbten Verlauf beiderseits symmetrisch unter einem Winkel von 40-60°. Bei einer Druckveränderung in dem Arbeitsraum 6 oder dem Ausgleichsraum 5 verbleibt die Zunge als Folge hiervon zunächst in der Ebene der Membrane, und sie klappt aus dieser unter Bildung eines Überströmkanals erst dann heraus, wenn Schwingungen einer extrem großen Amplitude oder einer extrem niedrigen Frequenz auftreten, wie für das Anlaß- oder Abstellschütteln eines Verbrennungsmoters typisch. Im Hinblick auf die sichere Gewährleistung dieses Effektes hat es sich als meckmäßig bewährt, wenn die Dicke der Membranen nicht zu gering bemessen ist und etwa 2 bis 6 mm beträgt. Die Dauerhaltbarkeit der Membrane ist entsprechend groß und gewährleistet ein nahezu unverändertes Betriebsverhalten während der gesamten Gebrauchsdauer des mit solchen Motorlager ausgestatteten Kraftfahrzeuges.

Die Ansprechempfindlichkeit des durch die Zunge gebildeten Ventils läßt sich durch eine Verdickung der Zunge und/oder Membrane in dem an die Durchtrennung anschließenden Bereich modifizieren. Einige Ausbildungsmöglichkeiten sind in den Figuren 7 bis 9 dargestellt. Sie haben in diesem Falle augrund der, bezogen auf die Ebene der Membrane, unsymmetrischen Zuordnung eine unterschiedliche Ansprechempfindlichkeit in beiden Richtungen zur Folge.

## Patentansprüche

1. Hydraulisch dämpfendes Motorlager, bei dem ein Auflager (1), ein ringförmig ausgebildetes Federelement (2) und ein Traglager (3) einen mit einer hydraulischen Flüssigkeit gefüllten Arbeitsraum umschließen, der durch eine bei einem bestimmten Druck optimal durchströmte Drosselöffnung (4) mit einem volumenveränderlichen, flüssigkeitsgefüllten Ausgleichsraum (5) verbunden ist, wobei zwischen den beiden Räumen eine im Bereich ihres äußeren Umfanges an dem Traglager (3) festgelegte, in Richtung des Arbeits- und des Ausgleichsraumes wechselweise ausbauchbare Membrane (8) angeordnet ist, die in wenigstens einem Teilbereich mit mindestens einer nicht geradlinig verlaufenden Durchtrennung (9) versehen ist, die eine Zunge (13) umschließt, welche die Bereiche der Membrane (8) überbrückt, in denen die Membrane (8) bei einer Ausbauchung die maximale und die minimale Dehnung aufweist,
dadurch gekennzeichnet, daß
die Membrane (8) von einem einstückig angeformten Wulst (10) umschlossen ist, wobei der Wulst zwischen Vorsprüngen (11) des Traglagers (3) angeordnet ist, die ihn auf der Seite der Membrane (8) mit Ringvorsprüngen (12) derartig hintergreifen, daß ein radialer Abstand zwischen den Ringvorsprüngen (12) und dem Wulst vorhanden ist.

2. Motorlager nach Anspruch 1, dadurch gekennzeichnet, daß die Zunge (13) eine Tiefe aufweist, die wenigstens so groß ist wie die Dicke an der dünnsten Stelle, mit der Maßgabe, daß das 8-fache der Dicke an der dünnsten Stelle nicht überschritten wird.

3. Motorlager nach Anspruch 1 bis 2, dadurch gekennzeichnet, daß die Zunge (13) eine Tiefe aufweist, die wenigstens so groß ist wie der 2-fache Wert ihrer Dicke an der dünnsten Stelle, mit der Maßgabe, daß das 5-fache der Dicke an der dünnsten Stelle nicht überschritten wird.

4. Motorlager nach Anspruch 1 bis 3, dadurch gekennzeichnet, daß der Wulst (10) um seine Achse schwenkbar zwischen den Vorsprüngen (11) des Traglagers (3) angeordnet ist.

5. Motorlager nach Anspruch 1 bis 4, dadurch gekennzeichnet, daß die Durchtrennung (9) so geführt ist, daß sich die Mittelachse der Zunge (13) von dem Wulst (10) ausgehend annähernd radial in die Membrane (8) erstreckt

6. Motorlager nach Anspruch 5, dadurch gekennzeichnet, daß die Durchtrennung beiderseits der Zunge (13) in den Wulst (10) eingreifend verlängert ist.

7. Motorlager nach Anspruch 1 bis 6, dadurch gekennzeichnet, daß mehrere Durchtrennungen (9) unter Bildung von auf den Umfang verteilte Zungen (13) vorhanden sind.

8. Motorlager nach Anspruch 7, dadurch gekennzeichnet, daß die Durchtrennungen so angeordnet sind, daß sich einander in der Membrane gegenüberliegende Zungen (13) ergeben.

9. Motorlager nach Anspruch 1 bis 8, dadurch gekennzeichnet, daß die Ringvorsprünge (12) auf der der Membrane (8) und dem Wulst (10) zugewandten Seite ein konvex gerundetes Profil aufweisen.

10. Motorlager nach Anspruch 1 bis 9, dadurch gekennzeichnet, daß bei nicht verformter Membrane (8) ein axialer Abstand zwischen den Ringvorsprüngen (12) und dem Wulst (10) vorhanden ist.

11. Motorlager nach Anspruch 1 bis 10, dadurch gekennzeichnet, daß die Durchtrennung (9) senkrecht zu der Ebene der Membran (8) betrachtet ein von der Senkrechten abweichendes Profil aufweist.

12. Motorlager nach Anspruch 11, dadurch gekennzeichnet, daß das Profil eine Abweichung von der Geraden aufweist.

13. Motorlager nach Anspruch 11-12, dadurch gekennzeichnet, daß das Profil an sich gewölbt ist.

14. Motorlager nach Anspruch, 11-13, dadurch gekennzeichnet, daß des Profil die Oberfläche der Membran (8) unsymmetrisch durchschneidet.

15. Motorlager nach Anspruch 1-14, dadurch gekennzeichnet, daß die Zunge und/oder die Membrane in dem an die Durchtrennung anschließenden Bereich ein- oder beidseitig verdickt ist.

16. Motorlager nach Anspruch 15, dadurch gekennzeichnet, daß die Verdickung bei einer Ausbildung des Motorlagers als Einkammermotorlager auf der dem Arbeitsraum zugewandten Seite der Membrane und/oder der Zunge angeordnet ist.

## Claims

1. A hydraulically damping engine mount, in which a support (1), an annular spring element (2) and a carrier mount (3) surround a working space which is filled with a hydraulic fluid and which is connected to a fluid-filled compensating space (5) of variable volume by means of a throttle orifice (4) having a throughflow optimum at a specific pressure, there being arranged between the two spaces a diaphragm (8) which is fixed in the region of its outer circumference to the carrier mount (3) and can bulge alternately in the direction of the working space and of the compensating space and which is provided, at least in a part region, with at least one through-cut (9) not extending in a straight line, which surrounds a tongue (13) which spans those regions of the diaphragm (8) in which the diaphragm (8), when bulging, has the maximum and the minimum expansion, characterized in that the diaphragm (8) is surrounded by a bead (10) formed on in one piece, the bead being arranged between projections (11) of the carrier mount (3) which engage behind it on the same side as the diaphragm (8) by means of annular projections (12) in such a manner that there is a radial spacing between the annular projections (12) and the bead.

2. An engine mount according to claim 1, characterized in that the tongue (13) has a depth which is at least as large as the thickness at the thinnest point, provided that eight times the thickness at the thinnest point is not exceeded.

3. An engine mount according to either of claims 1 and 2, characterized in that the tongue (13) has a depth which is at least as large as twice the value of its thickness at the thinnest point, provided that five times the thickness at the thinnest point is not exceeded.

4. An engine mount according to any of claims 1 to 3, characterized in that the bead (10) is arranged pivotably about its axis between the projections (11) of the carrier mount (3).

5. An engine mount according to any of claims 1 to 4, characterized in that the through-cut (9) is guided in such a way that the mid-axis of the tongue (13), starting from the bead (10), extends approximately radially to the diaphragm (8).

6. An engine mount according to claim 5, characterized in that the through-cut is prolonged on both sides of the tongue (13) so as to reach into the bead (10).

7. An engine mount according to any of claims 1 to 6, characterized in that a plurality of through-cuts (9) are provided so as to form tongues (13) distributed around the circumference.

8. An engine mount according to claim 7, characterized in that the through-cuts are arranged in such a way that tongues (13) located opposite one another in the diaphragm are obtained.

9. An engine mount according to any of claims 1 to 8, characterized in that the annular projections (12) have a convexly rounded profile on the side facing the diaphragm (8) and the bead (10).

10. An engine mount according to any of claims 1 to 9, characterized in that, when the diaphragm (8) is in the non-deformed state, there is an axial spacing between the annular projections (12) and the bead (10).

11. An engine mount according to any of claims 1 to 10, characterized in that the through-cut (9), as seen perpendicularly relative to the plane of the diaphragm (8), has a profile differing from the vertical.

12. An engine mount according to claim 11, characterized in that the profile is different from a straight line.

13. An engine mount according to either of claims 11 and 12, characterized in that the profile is curved per se.

14. An engine mount according to any of claims 11 to 13, characterized in that the profile intersects the surface of the diaphragm (8) asymmetrically.

15. An engine mount according to any of claims 1 to 14, characterized in that the tongue and/or the diaphragm is thickened on one side or on both sides in the region adjacent to the through-cut.

16. An engine mount according to claim 15, characterized in that, in a design of the engine mount as a single-chamber engine mount, the thickening is located on that side of the diaphragm and/or of the tongue which faces the working space.

## Revendications

1. Palier de moteur à amortissement hydraulique dans lequel un palier de support (1), un élément élastique de forme annulaire (2) et un palier porteur (3) entourent une enceinte de travail remplie de liquide hydraulique qui est connectée par un orifice de réglage (4) traversé de manière optimale sous une pression bien déterminée à une enceinte d'équilibrage (5) de volume variable et remplie de liquide tandis que, entre les deux enceintes, est disposée une membrane (8) pouvant se bomber alternativement en direction de l'enceinte de travail et de l'enceinte d'équilibrage et fixée dans la zone de sa périphérie extérieure au palier de support (3), ladite membrane étant pourvue, dans au moins une zone partielle , d'une séparation (9) n'ayant pas une forme en ligne droite, la séparation (9) entourant au moins une languette (13) et la languette qui couvre les zones de la membrane dans lesquelles la membrane présente l'allongement maximal et l'allongement minimal au cours de son bombement, caractérisé en ce que la membrane (8) est entourée par un bourrelet (10) formé d'une pièce, que le bourrelet est disposé entre des saillies (11) du palier de support (3) qui l'entourent du côté de la membrane (8) par des saillies annulaires (12), de telle sorte qu'il existe une distance radiale entre les saillies annulaires (12) et le bourrelet.

2. Palier de moteur selon la revendication 1, caractérisé en ce que la languette (13) présente une profondeur qui est au moins aussi grande que l'épaisseur à l'endroit le plus mince, avec pour condition de ne pas dépasser huit fois l'épaisseur à l'endroit le plus mince.

3. Palier de moteur selon les revendications 1 et 2, caractérisé en ce que la languette (13) présente une profondeur qui est au moins deux fois plus grande que son épaisseur à l'endroit le plus mince, avec pour condition que l'épaisseur ne dépasse pas cinq fois l'épaisseur à l'endroit le plus mince.

4. Palier de moteur selon les revendications 1 à 3, caractérisé en ce que le palier (10) est disposé avec possibilité de rotation autour de son axe entre les saillies (11) du palier de support (3).

5. Palier de moteur selon les revendications 1 à 4, caractérisé en ce que la séparation (9) est disposée de façon à ce que l'axe de la languette (13) s'étende depuis le bourrelet (10) dans un sens approximativement radial dans la membrane (8).

6. Palier de moteur selon la revendication 5, caractérisé en ce que la séparation est prolongée de manière à pénétrer dans le bourrelet (10) de part et d'autre de la languette (13).

7. Palier de moteur selon les revendications 1 à 6, caractérisé en ce que plusieurs séparations (9) existent avec formation de languettes (13) réparties sur la périphérie.

8. Palier de moteur selon la revendication 7, caractérisé en ce que les séparations sont disposées de façon à obtenir des languettes (13) situées en opposition les unes vis-à-vis des autres dans la membrane.

9. Palier de moteur selon les revendications 1 à 8, caractérisé en ce que les saillies annulaires (12) présentent, sur le côté tourné vers la membrane (8) et vers le bourrelet (10), un profil arrondi convexe.

10. Palier de moteur selon les revendications 1 à 9, caractérisé en ce qu'une distance axiale existe entre les saillies annulaires (12) et le bourrelet (10) lorsque la membrane (8) n'est pas déformée.

11. Palier de moteur selon les revendications 1 à 10, caractérisé en ce que la séparation (9) présente un profil s'écartant de la perpendiculaire lorsqu'on le considère perpendiculairement au plan de la membrane (8).

12. Palier de moteur selon la revendication 11, caractérisé en ce que le profil présente un écart par rapport à la ligne droite.

13. Palier de moteur selon les revendications 11 et 12, caractérisé en ce que le profil est cintré sur lui-même.

14. Palier de moteur selon les revendications 11 à 13, caractérisé en ce que le profil traverse, de manière dissymétrique, la surface de la membrane (8).

15. Palier de moteur selon les revendications 1 à 14, caractérisé en ce que la languette et/ou la membrane présentent une sur-épaisseur sur un côté ou sur les deux côtés dans la zone avoisinant la séparation.

16. Palier de moteur selon la revendication 15, caractérisé en ce que la sur-épaisseur est disposée sur le côté de la membrane et/ou de la languette tourné vers l'enceinte de travail, dans le cas où le palier de moteur constitue un palier de moteur à une chambre.
